(19) Europäisches Patentamt

European Patent Office

Office européen des brevets

(11) Veröffentlichungsnummer: **0 063 783**
**B1**

# (12) EUROPÄISCHE PATENTSCHRIFT

(45) Veröffentlichungstag der Patentschrift:
14.08.85

(21) Anmeldenummer: 82103359.4

(22) Anmeldetag: 21.04.82

(51) Int. Cl.⁴: **F 16 B 7/10, H 01 Q 1/10,**
**F 16 M 11/24, A 47 B 88/00**

(54) **Teleskopartig längenveränderliche Einrichtung.**

(30) Priorität: 28.04.81 DE 3116770
28.12.81 DE 3151559

(43) Veröffentlichungstag der Anmeldung:
03.11.82 Patentblatt 82/44

(45) Bekanntmachung des Hinweises auf die Patenterteilung:
14.08.85 Patentblatt 85/33

(84) Benannte Vertragsstaaten:
CH FR GB IT LI NL

(56) Entgegenhaltungen:
CH - A - 617 538
DD - A - 86 211
DE - A - 2 305 928
DE - A - 2 318 993
DE - A - 2 406 609
DE - A - 2 603 488
DE - A - 2 627 287
DE - A - 2 724 983
DE - C - 227 920
DE - C - 633 841
DE - C - 650 502
DE - C - 835 016
DE - C - 894 258
DE - C - 928 979
US - A - 2 376 121

(73) Patentinhaber: **DORNIER SYSTEM GmbH,**
**Postfach 1360, D-7990 Friedrichshafen (DE)**

(72) Erfinder: **Granzow, Manfred, Ing. grad., Im Saendler 11,**
**D-7996 Meckenbeuren (DE)**
Erfinder: **Schmelzle, Jürgen, Weidenring 63,**
**D-7990 Friedrichshafen (DE)**
Erfinder: **Suttner, Klaus, Am Weinberg 9,**
**D-7775 Bermatingen (DE)**

(74) Vertreter: **Landsmann, Ralf, Dipl.-Ing., Kleeweg 3,**
**D-7990 Friedrichshafen 1 (DE)**

## Beschreibung

Die Erfindung betrifft teleskopartig längenveränderliche Einrichtungen, wie Antennenträger, Tragarme oder dergleichen, mit aneinander geführten, relativ gegeneinander in Richtung der Gerätelängsachse verstellbaren Elementen und einer Vorschubeinrichtung für die Verstellung der Elemente, wobei je zwei einander benachbarte Elemente zusammenwirkende Glieder einer Verriegelung tragen und wobei die Betätigung der Glieder der Verriegelung durch die Relativbewegung der Elemente bewirkt wird.

Beispielsweise von Stativen mit längenveränderlichen, rohrförmigen Beinen ist bekannt, die einzelnen Elemente eines Beines von Hand aus ihrer Einfahrstellung herauszuziehen, wobei der Kraftangriff am innersten Element erfolgt. Die Relativbewegung der einzelnen Elemente ist durch Anschläge begrenzt und federnd nachgiebige Rasteinrichtungen fixieren die Elemente in der Endausfahrstellung. Dieser Aufbau erlaubt aber die Festlegung einer bestimmten Ausfahrreihenfolge der einzelnen Elemente zueinander nicht. Es gibt jedoch Anwendungsfälle für Einrichtungen der eingangs angegebenen Art, die eine bestimmte Ausfahrreihenfolge der zusammenwirkenden Elemente erfordern. So kann die Forderung bestehen, dass ausgehend von der Einfahrlage, z.B. von konzentrisch ineinanderliegenden, rohrförmigen Elementen beispielsweise das äusserste Element mit dem in ihm liegenden Paket der übrigen Elemente zuerst in seine Endausfahrstellung und nachfolgend jeweils das benachbarte Element in der Reihenfolge von aussen nach innen ausgefahren wird.

Umgekehrt dazu ist bei einer bereits vorgeschlagenen Ausführung nach der DE-A-26 03 488 für eine teleskopartig längenveränderliche Einrichtung zwingend, den Ausfahrvorgang mit dem innersten Teleskopelement einzuleiten und nachfolgend der Reihenfolge nach von innen nach aussen das jeweils benachbarte Element auszufahren.

Die bekannte Einrichtung enthält zur Fixierung der einander benachbarten Elemente und zur Bestimmung der Aus- bzw. Einfahrfolge überdrückbare Rastvorrichtungen mit Federgliedern, wobei die jedem Element zugeordneten Federungen untereinander unterschiedliche Federvorspannungen aufweisen.

Aufgabe der Erfindung ist es, die bisher bekannten Einrichtungen der genannten Art weiter zu entwickeln und eine bestimmte Aus- bzw. Einfahrreihenfolge der Elemente sicherzustellen und gleichzeitig in vorgegebenen Stellungen der Elemente zueinander zwischen den Elementen eine formschlüssige Verriegelung zu bewirken.

Die gestellte Aufgabe wird erfindungsgemäss dadurch gelöst, dass die im Sinne einer Ent- bzw. Verriegelung je zweier Elemente der Einrichtung betätigbare Verriegelung um eine zur Längsachse der Elemente senkrechte Achse schwenkbare Hebel enthält, die in Gegenvorsprünge am benachbarten Element eingreifende Verriegelungsvorsprünge und für das Zusammenwirken mit Anschlägen des jeweils benachbarten Elementes Schaltvorsprünge besitzen.

Eine so ausgebildete, teleskopartig längenveränderliche Einrichtung ermöglicht eine festgelegte Ausfahrreihenfolge und gleichzeitig eine sichere Verriegelung der Elemente untereinander in bestimmten Stellungen, z.B. in der Ausfahrstellung. Ferner arbeitet die Einrichtung auf einfache Weise selbsttätig in Abhängigkeit der Relativbewegung der einander benachbarten Elemente.

Die Ausbildung ist sowohl bei Einrichtungen, bei denen die Elemente mittels Motorkraft, als auch bei solchen, die von Hand verstellt werden, anwendbar. In der gleichen Weise, wie für den Ausfahrvorgang, kann die erfindungsgemässe Einrichtung auch für den Einfahrvorgang der Elemente nach einer vorbestimmten Einfahrreihenfolge eingesetzt werden. Als Teleskopelemente sind vorzugsweise konzentrisch ineinanderliegend angeordnete Rohrteile, aber auch Elemente in Form von Stäben, Bändern oder dergleichen mit geeigneten Führungen verwendbar.

Bei ineinanderliegend angeordneten rohrförmigen Elementen ergibt sich über den gesamten Eingriffsbereich zwischen den rohrförmigen Elementen gleitende Berührung. Es gibt jedoch Anwendungsfälle für Einrichtungen der eingangs angegebenen Art, bei denen die rohrförmigen Elemente eine relativ grosse Längserstreckung und auch einen relativ grossen Durchmesser aufweisen.

Für diese Anwendungsfälle bzw. für diese Ausbildungen ist es von erheblichem Nachteil, wenn die ineinanderliegend angeordneten rohrförmigen Elemente mittels der einander zugeordneten Mantelflächen bei Relativbewegung gleitend aneinander geführt bzw. aneinander zentriert sind. Der bei der Verstellung zu überwindende Reibungswiderstand ist erheblich. Es müssen ferner Verformungen der Elemente und die Auswirkungen der verschiedenen Umwelteinflüsse überwunden werden, welche die Funktiontüchtigkeit derartiger teleskopartig längenveränderlichen Einrichtungen beeinträchtigen.

Der Eingriff der Teleskopelemente ineinander soll daher mit geringstmöglicher Reibung erfolgen und eine Beeinträchtigung bzw. ein Ausfall der Einrichtung durch Materialverformung, durch Feuchtigkeit oder Staubeinwirkung oder dergleichen, vermieden werden.

Dazu ist in weiterer Ausgestaltung der Erfindung vorgesehen, dass jedem der Elemente eine Zentriereinrichtung zugeordnet ist, bestehend aus je drei gleichmässig auf den Umfang der Elemente verteilt angeordneten Zentriereinheiten, und dass die Zentriereinheiten ständig an der Innenwand des jeweils benachbarten Elementes federnd in Anlage gehaltene Führungen aufweisen.

So ausgebildete Zentriereinrichtungen bewirken einerseits eine Zentrierung und andererseits eine Führung der ineinander angeordneten Elemente der teleskopartig längenveränderlichen Einrichtung, wobei die Reibung bei der Relativbewegung der Elemente in Richtung ihrer Längsachse auf ein geringstmögliches Mass reduziert ist. Ferner können sich Umwelteinflüsse und Belastungen der einzelnen Elemente nicht auf die Funktionsfähigkeit der Einrichtung auswirken, wie z.B. Verschmutzungen, Temperaturschwankungen und Feuchtigkeitseinflüsse.

Nach einer weiteren vorteilhaften Ausgestaltung der Erfindung ist vorgesehen, dass die Federung mit abgefangener Vorspannung durch Anschläge in Vertiefungen an den Elementen angeordnet sind. Dadurch ist eine Voreinstellung der zur Zentrierung und Führung der Elemente gegeneinander erforderlichen Federkraft ermöglicht.

Beispielsweise Ausführungsformen werden nachfolgend anhand der Zeichnung beschrieben.

In der Zeichnung zeigt:

Figur 1 schematisiert und längsgeschnitten eine bekannte Ausführung eines teleskopartig längenveränderlichen Mastes, der eine Anzahl ineinanderliegende, rohrförmige Teleskopelemente aufweist, die

Figuren 2 bis 4 anhand von Ausschnitten aus Figur 1, erfindungsgemässe Ausführungsformen der Verriegelungseinrichtung in Verbindung mit den Teleskopelementen in Längsschnitten,

Figur 5 in einem teilweisen Längsschnitt ein weiteres Ausführungsbeispiel der Erfindung mit Zentrierungen für die Teleskopelemente und

Figur 6 einen Querschnitt nach der Linie VI–VI der Figur 5.

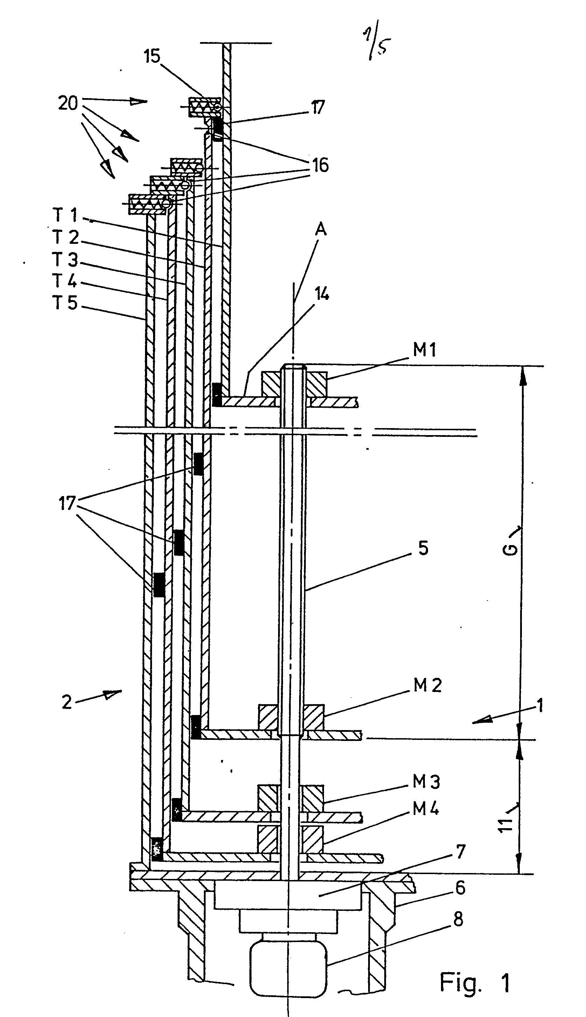

Die in Figur 1 gezeigte bekannte Ausführung stellt einen teleskopartig längenveränderlichen Mast 2 mit einer Vorschubeinrichtung 1 dar.

Der Mast 2 setzt sich dabei zusammen aus einer Anzahl von konzentrisch ineinanderliegend angeordneten und in Richtung ihrer gemeinsamen Längsachse A relativ gegeneinander verstellbaren, rohrförmigen Elementen T1, T2, T3, T4 und T5. Die Elemente sind durch hier nicht dargestellte Führungen an einer Relativdrehung gegeneinander in jeder axialen Lage gehindert.

Die Vorschubeinrichtung 1 besteht aus einer Antriebsspindel 5, die konzentrisch innerhalb der rohrförmigen Elemente T angeordnet und an einer feststehenden Konsole 6 drehbar gelagert ist. Das Lagerende der Spindel ist unter Zwischenschaltung eines Untersetzungsgetriebes 7 an einen Antriebsmotor 8 angeschlossen, der in seiner Drehrichtung umschaltbar ausgebildet ist.

Die Antriebsspindel 5 weist ausser ihrem Gewindeabschnitt G im Bereich des Lagerendes einen Magazinabschnitt 11 mit gegenüber dem Gewinde-Kerndurchmesser geringerem Durchmesser zur frei drehbaren Aufnahme von Mutterteilen M2, M3 bzw. M4 auf, was später noch näher erläutert ist. Die Mutterteile M sind jeweils an der unteren Seite der Elemente T über eine Trägerplatte 14 befestigt. In Einfahrstellung des Mastes 2 befinden sich sämtliche Mutterteile M ausser Eingriff mit dem Gewinde der Antriebsspindel 5 in konzentrischer Lage zum zylindrischen Abschnitt 11, ausgenommen das Mutterteil M1. Dieses Mutterteil M1 bleibt auch in maximaler Einfahrstellung mit dem Gewinde der Antriebsspindel in Eingriff.

Im umgekehrten Falle bleibt in maximaler Ausfahrstellung des Mastes 2 das Mutterteil M4 in Eingriff mit dem Gewinde der Antriebsspindel 5, während alle übrigen Mutterteile ausser Eingriff sind.

Die Vorschubeinrichtung 1 arbeitet nach dem Prinzip, dass stets mindestens eines der Mutterteile M mit dem Gewinde in Eingriff ist und bevor ein Mutterteil M am oberen oder unteren Ende der Antriebsspindel 5 sich von deren Gewinde abschraubt, das nächstfolgende Mutterteil M mit dem Spindelgewinde in Eingriff getreten sein muss.

Erfindungsgemäss sind zur Bestimmung der Reihenfolge des Ausfahrens der Teleskopelemente T bzw. der Sicherung und Fixierung zueinander selbsttätig arbeitende Verriegelungen 20 vorgesehen.

Im Falle der Fig. 1 sind es federbelastete Verriegelungselemente 15, die in entsprechende Vertiefungen 16 der Elemente T eingreifen. Da die Federvorspannung der Verriegelungen 20, ausgehend vom Teleskopelement T2 zum Element T5 zunimmt, wird bei axialer Krafteinwirkung auf Element T1 zunächst die Verriegelung zwischen Element T1 und T2 geöffnet, wodurch sich Element T1 in Bewegung setzen kann. Die restlichen Elemente bleiben dabei jedoch in Ruhe.

Element T1 bewegt sich so lange, bis sein oberer, aussen angebrachter Führungsring 17 am Gehäuse der Einrichtung 20 von Element T2 anschlägt und versucht, diesen mitzunehmen. Das bewirkt ein Öffnen der Verriegelung zwischen dem Element T2 und Element T3. Der weitere Ausfahrvorgang erfolgt entsprechend.

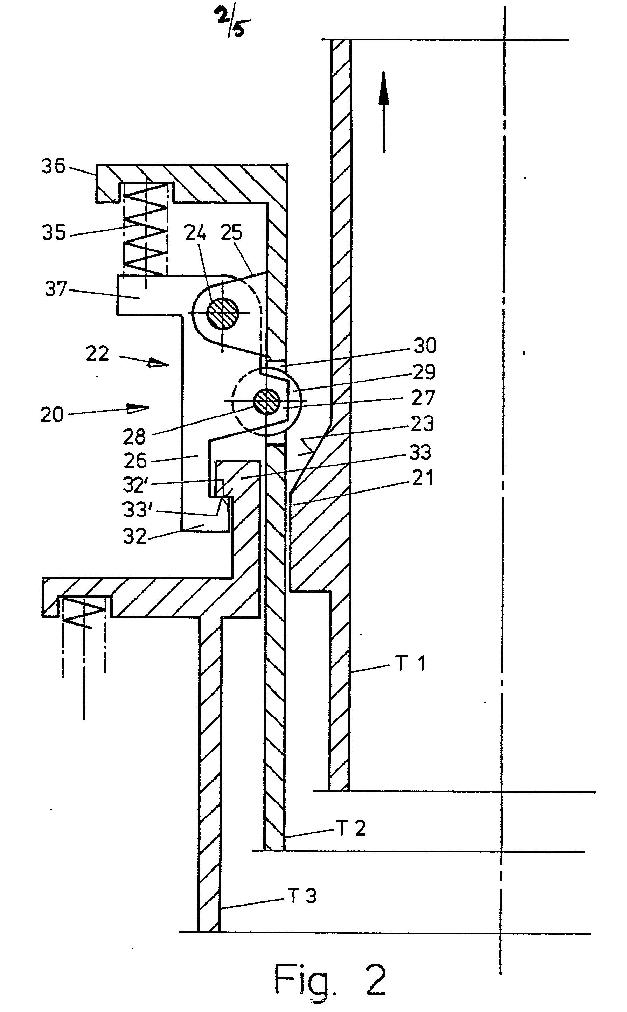

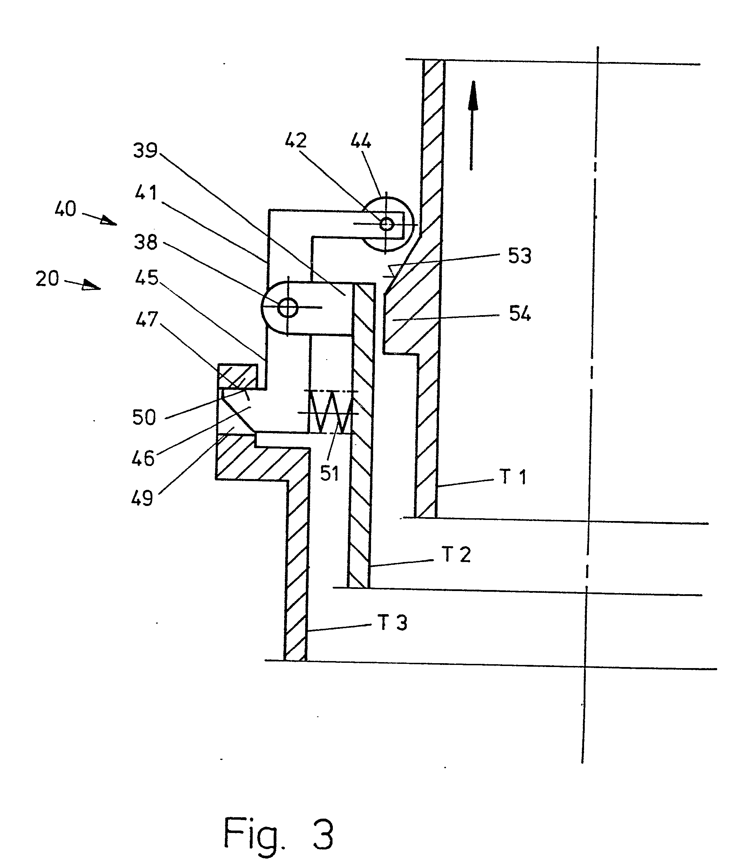

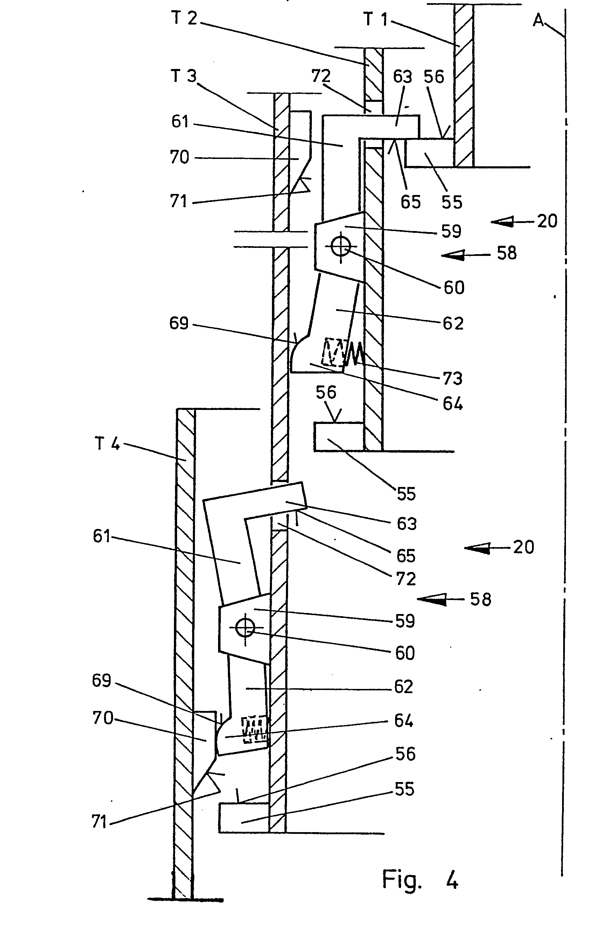

Im Folgenden werden gemäss der Fig. 2 bis 4 drei demgegenüber unterschiedliche Ausführungen beschrieben, wobei in Fig. 2 und 3 die Ausfahrfolge vom innersten zum äussersten Element T erfolgt, in Fig. 4 dagegen in umgekehrter Reihenfolge. Bei der Ausführungsform gemäss Fig. 2 ist vorgesehen, dass aus der Einfahrstellung zuerst das innerste Teleskopelement T1 und der Reihenfolge nach von innen nach aussen das Teleskopelement T2 und anschliessend das Teleskopelement T3 ausgefahren wird.

Der Aufbau der Verriegelungseinrichtung 20 ist hier so getroffen, dass zuerst das innerste Teleskopelement T1 mittels eines Anschlages 21 den Verriegelungshebel 22 der Einrichtung 20 betätigt und zwischen dem Teleskopelement T2 bzw. T3, in einer vorbestimmten Ausfahrstellung, die Verriegelung gelöst wird.

Der Anschlag 21 weist dazu eine geneigte Schaltfläche 23 auf, die für das Zusammenwirken mit dem Verriegelungshebel 22 am benachbarten Teleskopelement T2 bestimmt ist. Der Verriegelungshebel 22 ist um eine Lagerachse 24 an einer Lagergabel 25 des Elementes T2 schwenkbar und trägt im mittleren Abschnitt seines Hebelarmes 26 ebenfalls mittels einer Lagergabel 27 eine Drehachse 28 mit einer drehbaren Rolle 29, die durch eine Durchbrechung 30 in der Wand des Teleskopelementes T2 hindurchragt und auf die Schaltfläche 23 des Teleskopelementes T1 auflaufen kann.

Das freie Ende des Hebelarmes 26 des Verriegelungshebels 22 besitzt einen Verriegelungsvorgang 32 mit einer Verriegelungsfläche 32'. Am oberen Ende des Teleskopelementes T3 ist ein dem Verriegelungsvorsprung 32 zugeordneter Gegenvorsprung 33 gebildet, dessen Verriegelungsfläche 33' mit der Fläche 32' des Verriegelungshebels 22 zusammenwirkt. Es ist ferner noch ein Federglied 35 vorhanden, das sich einerseits an einem Vorsprung 36 des Elementes T2 abstützt und andererseits auf den Verriegelungshebel 22 über dessen Ansatz 37 in der Weise einwirkt, dass der Hebel 22 stets federnd in seiner Verriegelungsstellung (siehe Fig. 2) gehalten ist.

Die Wirkungsweise des gezeigten Ausführungsbeispieles ist dabei so, dass der Anschlag 21 des Teleskopelementes T1, bevor sich das zugehörige Mutterteil M1 von der Antriebsspindel 5 am oberen Ende abschraubt, den Verriegelungshebel 22 um seine Achse 24 gegen die Wirkung des Federgliedes 35 schwenkt und damit die Verriegelungsvorsprünge 32 bzw. 33 des Hebels 22 bzw. des Teleskopelementes T3 mit ihren Verriegelungsflächen 32' bzw. 33' ausser Eingriff treten. Damit ist die Verriegelung zwischen dem Teleskopelement T2 und dem benachbarten Teleskopelement T3 gelöst, so dass nunmehr das Teleskopelement T2 durch einen Anschlag wie bei 17 in Fig. 1 des Teskopelementes T1, in Ausfahrrichtung mitgenommen wird und sich dessen Mutterteil M2 auf die Spindel 6 aufzuschrauben vermag.

In der gleichen Weise arbeiten auch die weiteren Elemente und Verriegelungen zusammen.

Bei dem in Fig. 3 dargestellten Ausführungsbeispiel ist der Verriegelungshebel 40 doppelarmig und drehbar um eine Achse 38, wobei der Hebelarm 41 mittels der Lagerachse 42 eine Rolle 44 trägt, die für das Zusammenwirken mit der Schaltfläche 53 des Anschlages 54 am Teleskopelement T1 bestimmt ist. Der Hebelarm 45 weist einen Verriegelungsvorsprung 46 mit einer Verriegelungsfläche 47 auf, die mit der Verriegelungsfläche 50 einer Vertiefung 49 am oberen Ende des Teleskopelementes T3 zusammenwirkt. Der Verriegelungshebel 40 wird mittels eines sich am Teleskopelement T2 abstützenden Federgliedes 51 ständig mit seinem Vorsprung 46 in Eingriff mit der Vertiefung 49 des Teleskopelementes T3 gehalten, so lange die Rolle 44 nicht auf die Schaltfläche 53 des Anschlages 54 aufläuft. Der Hebel 40 ist dabei um die Lagerachse 38 schwenkbar, welche mittels der Gabel 39 am Teleskopelement T2 gelagert ist.

Die Wirkungsweise ist hierbei die gleiche, wie bei der Ausführung gemäss Fig. 2 bereits beschrieben.

Durch axiale Verschiebung des Teleskopelementes T1 im Sinne einer Ausfahrbewegung mittels der Antriebsspindel 5 wird über den Anschlag 54 bzw. dessen Schaltfläche 53 der Hebel 40 um seine Achse 38 gegen die Wirkung des Federgliedes 51 geschwenkt und der Verriegelungsvorsprung 46 ausser Eingriff gebracht mit der Vertiefung 49 des Teleskopelementes T3. Diese Entriegelung findet statt, wenn das Mutterteil M2 des Teleskopelementes T2 mit seinem Gewinde in Eingriff gelangt ist mit dem Gewinde der Antriebsspindel 5 (Fig. 1). Auch diese Ausführung ist nicht auf die Anzahl der hier dargestellten drei Teleskopelemente beschränkt, sondern es ist möglich, eine grosse Anzahl solcher Teleskopelemente mit entsprechenden Verriegelungsvorrichtungen 40 vorzusehen.

Das in Fig. 4 dargestellte Ausführungsbeispiel unterscheidet sich von den Ausführungen gemäss Fig. 2 bzw. 3, einerseits durch eine von der Fig. 1 unterschiedliche Antriebsmöglichkeit für die Teleskopelemente (nicht dargestellt) und andererseits durch eine Ausfahrreihenfolge der Elemente T von aussen nach innen mit entsprechender Entriegelung, sowie durch eine unterschiedlich aufgebaute Entriegelungseinrichtung.

Die Ausführung enthält vier Teleskopelemente, und zwar T1 bis T4. Es ist jedoch auch hier denkbar, eine grössere Anzahl von Teleskopelementen zu verwenden.

Jedes Teleskopelement besitzt im Bereich seines unteren Endes einen sich radial nach aussen erstreckenden Verriegelungsanschlag 55 mit einer Verriegelungsfläche 56. Ferner ist an den Teleskopelementen T4 und T3 ein sich radial nach innen erstreckender Anschlag 70 mit einer geneigt verlaufenden Schaltfläche 71 vorgesehen.

Die Teleskopelemente T3 bzw. T2 tragen mittels einer Lagergabel 59 eine Lagerachse 60 für die schwenkbare Aufnahme eines doppelarmigen Verriegelungshebels 58. Am Arm 61 ist ein sich radial in bezug auf die Längsachse A der Elemente T erstreckender Verriegelungsvorsprung 63 mit einer Verriegelungsfläche 65 vorgesehen, während in der gleichen Art der Hebelarm 62 einen Vorsprung 64 mit einer Schaltfläche 69 besitzt, der sich jedoch radial entgegengesetzt zum Vorsprung 63 erstreckt. Die Schaltfläche 69 des Vorsprungs 64 arbeitet mit der Schaltfläche 71 des Vorsprungs 70 zusammen. Ferner greift der Vorsprung 63 durch eine Durchbrechung 72 im zugehörigen Teleskopelement T2 bzw. T3 hindurch und kann so mit seiner Verriegelungsfläche 65 mit der Verriegelungsfläche 56 des Anschlages 55 im Sinne einer Verriegelung des Teleskopelementes T3 und T2 bzw. T2 und T1 zusammenarbeiten. Ein Federglied 73 hält den Verriegelungshebel 58 in verriegelter Stellung.

Die Wirkungsweise ist für dieses Ausführungsbeispiel wie folgt:

Werden, nachdem das Teleskopelement T4 seine maximale Ausfahrstellung erreicht hat, die Teleskopelemente T3, T2 bzw. T1 angetrieben, so läuft der Verriegelungshebel 58 des Teleskopelementes T3 mit seinem Vorsprung 64 bzw. der Schaltfläche 69 auf die Schaltfläche 71 des Vorsprungs 70 des Teleskopelementes T4 auf, wobei der Verriegelungshebel 58 gegen den Widerstand des Federgliedes 73 um seine Achse 60 schwenkt. Dabei kommen die Verriegelungsflächen 56 bzw. 65 des Vorsprunges 63 bzw. des Anschlages 55 ausser Eingriff und das Teleskopelement T2 ist gegenüber dem Teleskopelement T3 entriegelt.

Ein weiteres Ausfahren des Teleskopelementes T3 gegenüber T4 ist durch einen Anschlag ähnlich wie bei 17 in Fig. 1 verhindert. Der gleiche Vorgang vollzieht sich beim weiten Ausfahren zwischen dem Element T2 bzw. T1.

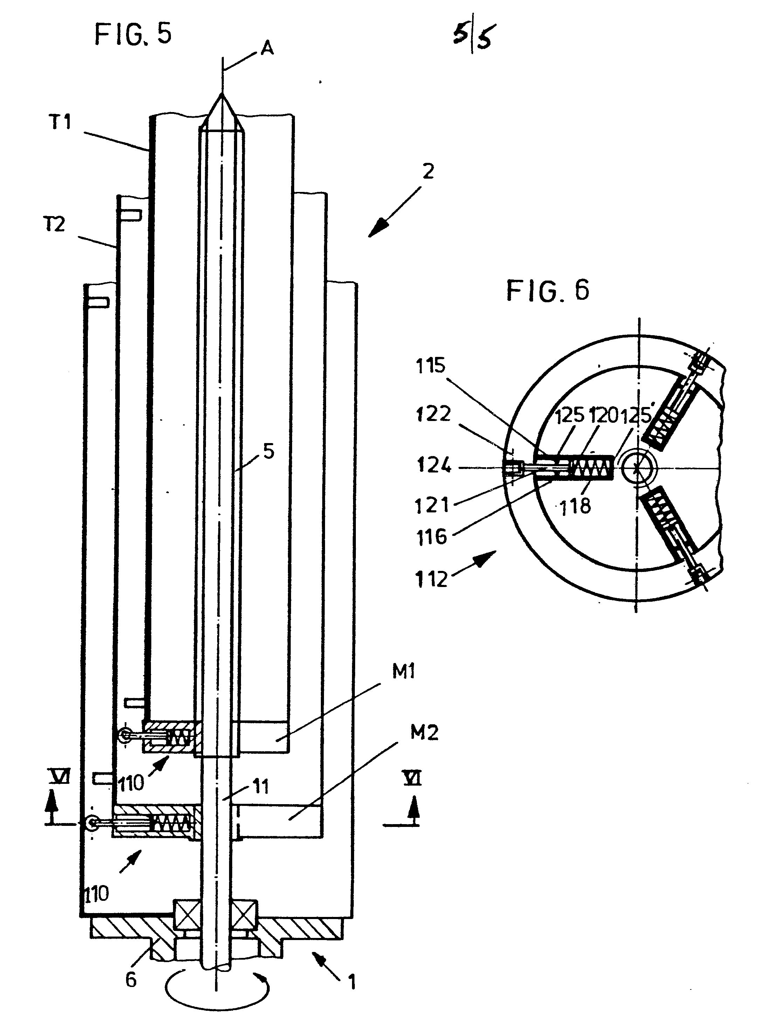

Entsprechend dem Ausführungsbeispiel gemäss Fig. 5 und 6 weist jedes der Teleskopelemente T eine Zentriereinrichtung 110 auf. Jede Zentriereinrichtung 110 besteht aus drei gleichmässig auf den Umfang der Mutterteile M verteilt angeordneten Zentriereinheiten 112.

Für die Aufnahme der Zentriereinheiten 112 sind in die Mutterteile M zur Längsachse A radiale Bohrungen 115 eingearbeitet. Die Bohrungen dienen zur Aufnahme von Buchsen 116, in welche Schraubendruckfedern 118 eingesetzt sind. An den Schraubendruckfedern 118 stützen sich über Platten 120 radial bewegliche Trägerbolzen 121 ab. Diese Trägerbolzen 121 sind an ihrem freien Ende gabelförmig ausgebildet und nehmen frei auf Lagerachsen 122 drehbare und sich an der Innenwand der Teleskopelemente T des benachbarten Elementes abstützende Führungsrollen 124 auf.

Zur Begrenzung der Federkraft der Federn 118 und des radialen Ausfahrweges der Trägerbolzen 121, sind in den Buchsen 116 Begrenzungsanschläge 125 für den Anschlag der Abstützplatten 120 gebildet. Die Federn 118 der Zentriereinheit 112 einer Zentriereinrichtung 110 stehen bei Anschlag der Platten 120 an den Begrenzungsanschlägen 125 untereinander unter einer gleichen Federvorspannung. Die zweite Abstützung für die Federn 118 bildet die Bodenwand 125' der Buchsen 116.

Mittels der Zentriereinheiten 112 stützen sich die Teleskopelemente T unter der Wirkung der Federn 118 nachgiebig aneinander ab. In jede Relativstellung der Teleskopelemente T ist sowohl deren einwandfreie Zentrierung, als auch deren einwandfreie, reibungsarme Führung dabei gewährleistet.

**Patentansprüche:**

1. Teleskopartig längenveränderliche Einrichtung (2), wie Antennenträger, Tragarme oder dergleichen, mit aneinander geführten, relativ gegeneinander in Richtung der Gerätelängsachse verstellbaren Elementen (T) und einer Vorschubeinrichtung (1) für die Verstellung der Elemente, wobei je zwei einander benachbarte Elemente zusammenwirkende Glieder einer Verriegelung (20) tragen und wobei die Betätigung der Glieder der Verriegelung durch die Relativbewegung der Elemente bewirkt wird, dadurch gekennzeichnet, dass die im Sinne einer Ent- bzw. Verriegelung je zweier Elemente (T) der Einrichtung betätigbare Verriegelung (20) um eine zur Längsachse (A) der Elemente (T) senkrechte Achse (24; 42; 60) schwenkbare Hebel (22; 40; 58) enthält, die in Gegenvorsprünge (33; 49; 55) am benachbarten Element (T) eingreifende Verriegelungsvorsprünge (32; 46; 63) und für das Zusammenwirken mit Anschlägen (21; 54; 70) des jeweils benachbarten Elementes (T) Schaltvorsprünge (29; 44; 64) besitzen.

2. Einrichtung nach Anspruch 1, dadurch gekennzeichnet, dass das Verriegelungsglied (22; 40; 58) durch Federglieder (35; 51; 73) in Verriegelungsstellung gehalten ist.

3. Einrichtung nach Anspruch 1 oder 2, dadurch gekennzeichnet, dass jedem der Elemente (T) eine Zentriereinrichtung (110) zugeordnet ist, bestehend aus je drei gleichmässig auf den Umfang der Elemente (T) verteilt angeordneten Zentriereinheiten (112), und dass die Zentriereinheiten (112) ständig an den Innenwänden des jeweils benachbarten Elementes (T) federnd in Anlage gehaltene Führungen (124) aufweisen.

4. Einrichtung nach Anspruch 1 bis 3, dadurch gekennzeichnet, dass die Federungen (118) mit abgefangener Vorspannung durch Anschläge (125 bzw. 125') in Vertiefungen (116) an den Elementen (T) angeordnet sind.

5. Einrichtung nach Anspruch 1 bis 4, dadurch gekennzeichnet, dass die Zentriereinheiten (112) je durch eine in eine Bohrung (115) der Elemente (T) eingesetzte Buchse (116) für die Aufnahme der Federungen (118) und einen radial zur Einrichtungslängsachse (A) gegen die Wirkung der Federungen (118) verstellbaren Trägerbolzen (121) für die Aufnahme einer frei drehbaren und mit der Innenwandung des jeweils benachbarten Elementes (T) ständig in Anlage gehaltenen Führungsrollen (124) gebildet sind.

6. Einrichtung nach Anspruch 1 bis 5, dadurch gekennzeichnet, dass die Federkraft der Federungen (118) einstellbar ist.

**Revendications**

1. Dispositif (2) à longueur variable de manière télescopique, tel que supports d'antennes, bras porteurs ou analogues, comportant des éléments (T) guidés les uns sur les autres réglables les uns par rapport aux autres dans le sens de l'axe longitudinal du dispositif et un mécanisme (1) d'avance pour le déplacement des éléments, les éléments adjacents portant des organes coopérants d'un mécanisme de verrouillage (20), l'actionnement des organes du mécanisme de verrouillage étant provoqué par le mouvement relatif des éléments, caractérisé par le fait que les mécanismes de verrouillage (20), actionnables dans le sens d'un verrouillage ou d'un déverrouillage de deux éléments (T) adjacents du dispositif, comprennent chacun un levier (22; 40; 58) pouvant pivoter autour d'un axe (24; 42; 60) perpendiculaire à l'axe longitudinal (A) des éléments (T), le levier comportant une projection (32; 46; 63) de verrouillage venant en prise avec une contre-projection (33; 49; 55) sur l'élément adjacent (T) et une projection de commande (29; 44; 64) destinée à coopérer avec une butée (21; 54; 70) de l'élément adjacent (T).

2. Dispositif selon la revendication 1, caractérisé par le fait que les organes de verrouillage (22;

40; 58) sont maintenus dans leur position de verrouillage par des éléments élastiques (35; 51; 73).

3. Dispositif selon la revendication 1 ou 2, caractérisé par le fait qu'à chacun des éléments (T) est associé un mécanisme de centrage (110) constitué à chaque fois par trois pièces de centrage (112) régulièrement réparties sur la périphérie de l'élément (T) et que les pièces de centrage (110) présentent des guides (124) maintenus en permanence par des ressorts en appui sur la paroi intérieure de l'élément adjacent (T).

4. Dispositif selon les revendications 1 à 3, caractérisé par le fait que les ressorts (118) dont la tension est controlée sont maintenus par des butées (125 ou 125') dans des encoches (116) pratiquées sur les éléments (T).

5. Dispositif selon les revendications 1 à 4, caractérisé par le fait que les pièces de centrage (112) sont formées chacune par une douille (116) insérée dans un perçage (115) de l'élément (T) et destinée à recevoir le ressort (118), et par une tige de support (121) réglable radialement par rapport à l'axe longitudinal (A) du dispositif contre l'effet du ressort (118) et destinée à recevoir un galet de guidage fou (124) maintenu constamment appliqué contre la paroi intérieure de l'élément (T) adjacent.

6. Dispositif selon les revendications 1 à 5, caractérisé par le fait que la force élastique des ressorts (118) est réglable.

## Claims

1. A telescoping, variable-length device (2) for instance an antenna support, support arm or the like, with elements (T) guided against each other and displaceable in the direction of the longitudinal axis of the apparatus and with an advance system displacing the elements (T), for the purpose of achieving a difined sequence of extension of the elements every two adjoining elements (T) comprise cooperating members of a locking system (20), the members of the locking system (20) are actuated by relativ moving of the elements (T), characterized in that the locking system (20) which is actuated in the sense of unlocking or locking of the two adjoining elements (T) consists of a lever (22; 40; 58) pivoting about a shaft (24; 42; 60) perpendicular to the longitudinal axis (A) of the elements (T) and comprising locking projections (32; 46; 63) engaging mating projections (33, 49; 55) at the adjoining elements (T) and switching projections (29, 44; 64) to cooperate with stops (21; 54; 70).

2. Device per claim 1, characterized in that the locking member (22; 40; 58) is kept in the locked position by spring members (35; 51; 73).

3. Device per claim 1 or 2, characterized in that a centering system (110) is associated with each of the elements (T) and consists of three centering units (112) uniformly distributed along the periphery of the elements (T), and in that the centering units (112) comprise guide means (124) permanently kept in spring-loaded contact with the inside walls of the perticular adjoining elements (T).

4. Device per claims 1 through 3, characterized in that the spring means (118) with limited prestressing by stop means (125 and 125') are mounted in recesses (116) in the elements (T).

5. Device per claims 1 through 4, characterized in that the centering units (112) each consist of a bush (116) inserted into a borehole (115) of the elements (T) to seat the spring means (118) and a support pin (121) radially adjustable with respect to the lonitudinal axis (A) of the device against the action of the spring means (118) to seat a freely rotatable guide roller (124) which is permanently kept in contact with the inside wall of the particular adjoining element (T).

6. Device per claims 1 through 5, characterized by the spring force of the spring means (118) being adjustable.

Fig. 1

Fig. 2

Fig. 3

Fig. 4

FIG. 5

FIG. 6